# EUROPEAN PATENT SPECIFICATION

(11) **EP 2 731 697 B1**
(45) Date of publication and mention of the grant of the patent: **30.12.2015**
(21) Application number: 12870333.7
(22) Date of filing: 06.04.2012
(51) Int. Cl.: B01D 39/16

(54) **PROCESS OF OBTAINING A FILTER MAERIAL AND FILTER ELEMENT FOR PURFYING AIR BY MEANS OF A SALT PREPARATION**
HERSTELLUNGSVERFAHREN EINES FILTERMATERIALS UND FILTERELEMENTES ZUR LUFTREININGUNG DURCH EINE SALZLÖSUNG
PROCÉDÉ D'OBTENTION DE MATÉRIAUX FILTRANTS ET D'ÉLÉMENTS FILTRANTS POUR LA PURIFICATION D'AIR AU MOYEN D'UNE PRÉPARATION SALINE

(30) Priority: 07.04.2011 RO 201100309
(43) Date of publication of application: 21.05.2014
(73) Proprietor: SC Tehno Bionic Srl, Buzau (RO)
(72) Inventor: PASCU, Constantin, Bucuresti (RO)
(74) Representative: Apostol, Salomia
(86) International application number: PCT/RO2012/000007
(87) International publication number: WO 2013/172727

(56) References cited:
- EP-A1- 1 953 286
- WO-A2-01/78868
- WO-A2-03/024568
- WO-A2-2007/026363

## Description

The invention refers to a process of obtaining a filtering material and a filtering element containing it, used in a device and installation for the air saline purification in the ambient space, with therapeutic effects, for health purposes and prevention in respiratory diseases.

There are known processes for obtaining a filter material which is obtained from mixing porous sodium chloride micro-crystals in a dish with sodium chloride dissolved in iodated sulfured mineral water from Baile Fisici resulting in a paste which is passed under pressure through a 2 mm die, the cylindrical granular material being dried for 24 hours at a temperature of 40 ... 60 degrees Celsius, choosing the fraction 1.5 ... 2.5 mm with which the filter layer is made - Invention Patent RO 11822981.

The disadvantages of these processes consist of the fact that the resulting material has a rigid structure and a relatively high weight.

There are known processes for obtaining a filter material consisting in that in a vessel there are mixed porous sodium chloride micro-crystals obtained by recirculation of an over-saturated solution of sodium chloride resulting a paste which shall be deposited on a grid type pads which then are dried at a temperature of 50 °C for 8 hours after which they can be over-impregnated in one or more stages by immersion in one or more balneary used mineral waters such as sulphureous, bicarbonate, arsenical, indurate waters, after which they are dried at a temperature of 25 ... 50 °C with periods varying depending on the nature of the impregnation mineral water - Invention Patent RO no. 117126.

The disadvantages of these processes consist that the deposit of the saline crystals on a grid type plate leads to obtaining a relatively low porosity.

There are well-known the elements for filtering the dust in the air which include either a porous texture, or a material of electrostatic properties, either some water curtains or of various chemical solutions.

There are also known other elements of air purification which include either some layers of active carbon, or some textures impregnated with activated carbon to retain various chemical compounds present in the air.

There are also known other elements of air sterilization which comprise an ultraviolet lamp.

All these methods have the disadvantage that the purified air is difficultly breathable by people with respiratory problems.

It is known the therapeutic effect of the saline air in the salt mines or on the sea coast.

The disadvantage in this case is that this effect takes place on a limited area.

There are known the filter elements consisting of a filter material obtained by the method given above, which have a thickness of 0.5 ... 10 cm which enable an air transfer through them at a speed of 0.1 ... 5 m/s, the contact time being linked to the speed of the air passing through the layer thickness, the solid particles of NaCl in the purified air being less than 2 microns - Patent RO no. 118229B1.

The disadvantages of these filter elements are they have a relatively low size and their ability of air purification is limited by the relatively small size of the voids whose dimensions are given by the size of granules.

There are known filter elements which comprise some saline plates obtained from the application of the method given above, filters which are made of a plastic material such as polystyrene in the shape of a grid, having a thickness of 3 mm and dimensions of 85x155 mm. - Patent RO no 117126B.

The disadvantage of these filter elements is that they require a relatively bulky and heavy construction for the volume of air to be treated and have a relatively low,efficiency in filtering the air and a relatively low capacity of salinisation of the air.

WO 2007/026363 discloses a method for reducing biological contamination of indoor air, providing a concentrated salt solution, circulating said concentrated salt solution through a treatment zone comprising layers of cellulose fibers; causing a stream of biologically contaminated air to flow through said treatment zone, such that said contaminated air is contacted with said salt solution in said treatment zone; and withdrawing purified air from said treatment zone..

The technical issue solved by the inventions claimed in the group of invention consists in obtaining a material and a filter element which contains this material which provides an increased efficiency of air purification and a relatively large capacity of air salinisation in a various range of sizes from smallest to largest and very large ones with self-supporting three-dimensional structure and relatively small weight under the conditions in which the treated air is easily breathable also by the persons with respiratory problems.

The procedure, in accordance with the invention, removes the disadvantages shown before and solves the technical problem in that on a support consisting of a non-woven textile material with a thickness of 5 to 50 mm and a weight of minimum 200 g/mp, on which there are made one, two or more saline crystalline deposits of salts by successive material impregnations by immersion in salt over-saturated solutions that contains mainly sodium chloride, after each impregnation of the material having a slow drying by leaking or by blowing with a jet of air in a room with a temperature between 20 and 35 °C and a humidity of 50 to 70% for 2 to 3 days, and also, after each immersion, can take place a dusting of the deposit surface with salt powders containing up to 98 % of sodium chloride.

Another objective of the process in accordance with the claimed invention is the choice of a non-woven textile material from which the support is made, textile material which is made up of synthetic fibers such as polyether or polypropylene or mixtures thereof in accordance with the European standards for coarse and fine filters, G 1, G2, G3, G4.

Another objective of the process in accordance with the claimed invention is that the non-woven textile is successive impregnated with an over-saturated solution obtained from rock salt derived directly from a natural source, rock salt which contains up to 98% of sodium chloride and traces of salts of calcium and magnesium, and preferably the penultimate and final impregnation of the non-woven material could be made with an over-saturated solution of sodium chloride and potassium iodide or magnesium sulphate or mineral sulphureous, arsenic, bicarbonate or iodinate waters.

Another objective of the process in accordance with the claimed invention is that after the last impregnation of the non-woven textile material followed by drying, on both sides of the material there can be sprayed, for 10 seconds, an over-saturated solution of sodium chloride obtained from rock salt that contains 96% sodium chloride, 1, 2% magnesium sulphate, 0.2 % potassium iodide, after which the material is blown with a jet of air at a speed of 10 to 15 m/sec, and then is dried slowly in an enclosure for 5 days at a temperature of 25 °C and a humidity of 60 %.

Another objective of the process in accordance with the claimed invention is that the non-woven material impregnation can be done by successive spray-ups on both sides.

Another objective of the process in accordance with the claimed invention is that the non-woven textile material is placed in a box with perforated sides of a filter cartridge in which there is placed a layer consisting of granules extruded from rock salt after which all the box is subject to one, two or more successive impregnations in an over-saturated salt solution, a controlled drying taking place after each impregnation.

The apparatus for filtering with saline purification of air in accordance with the invention removes the disadvantages shown before and resolved the technical issue in that it comprises a filter element which consists of a non-woven polyester material with a thickness of 14 to 16 mm and a weight of 350 g / square meter and dimensions of 10x20 mm which is impregnated by immersion in a solution made from rock salt that contains 98% sodium chloride, it has taken over 2 grams of salts distributed in the porous structure mass, respectively 10.5 grams/ square decimeter, this material being placed in a filter case made of a plastic material with a wall with a thickness of 1 ... 1.2 mm that delimits a three dimensional space with values of 10x10x2.5 cm having on the lateral faces some grids made of a plastic material with a mesh of 10 mm, by using the filter in a room with a volume of 2 cubic meters for 3 hours with a jet flow of 17 cubic meter / hour, the number of particles in the vessel being reduced by 92 %, and the air salinization was of 0,22 milligrams /cubic meter.

Another objective of the apparatus for filtering with saline purification of air-produced in another constructive embodiment in accordance with the invention consists in that it comprises a filter element which is made up of a non-woven polyester material which, by impregnation in an over-saturated solution made from rock salt that contains 98% sodium chloride, drying and dusting on a face with salt powder with a finesse under 150 micrometers, took over 29g salts distributed in the porous structure mass, respectively 14.5 g / square decimeter, this material being placed in a filter case, in a chamber with a volume of 2 cubic meter, providing a reduction in the number of particles in the air with 96 %, an air salinity of 0.28 mg/cubic meter and the flow of the purified air is 16 cubic meter /h, after up to 3 hours of operation.

Another objective of the apparatus for filtering with saline purification of air-produced in another constructive embodiment in accordance with the invention consists in that it comprises a filter element which is formed of non-woven polyester material with a thickness of 10 - 12 mm and a weight of 220 g / square meter and a size of 20x60 cm which is impregnated by spraying an over-saturated rock salt solution made from rock salt containing 98% sodium chloride, impregnation which is repeated twice followed by two impregnations by spraying with an over-saturated solution obtained from sodium chloride dissolved in iodated sulfured mineral water, it took over 98 g salts distributed in the porous structure mass, respectively 12.25 g/square decimeter, the filter made by fixing the material between 2 frames made of a plastic mesh with a size of 10 mm reduced the number of particles in the air with 60% and insured the air salinisation of 0,11 mg/cubic meter, in a room with a volume of 150 cubic meters for up to 24 hours at the air speed of 2m/s and a flow rate of 800 cubic meters/h.

Another objective of the apparatus for filtering with saline purification of air-produced in another constructive embodiment in accordance with the invention consists in that it comprises a filter element which is formed of a non-woven polyester material with a thickness of 12 - 14 mm and a weight of 320 g/square meter which after 3 impregnations in over- saturated solution of rock salt containing 98 sodium chloride and repeated dryings, takes, by impregnation, over 20 grams of salts distributed in the non-woven material mass, 3 pieces with dimensions 10x10 cm being overlapped and placed in a case made of plastic in which, and by re-circulated an air jet with an average flow of 17 cubic meter / h for 24 h in a room with a volume of 50 cubic meter, the total number of particles in the room decreases with 70% and the air has a saline load of 0.12 milligrams/cubic meter

Another objective of the apparatus for filtering with saline purification of air-produced in another constructive embodiment in accordance with the invention consists in that it comprises a filter element which is layered, in which the saline impregnated non-woven material made up of a non-woven polyester material with a 12 mm thickness and a weight of 350 g/square meter is to one of the faces and to the other there is the layer of saline grains connected by microcrystalline deposit, and by the filter cartridge air being re-circulated for 24 hours, at an air flow of 15 cubic meter/h the air passing the cartridge through the face formed by the non-woven material, obtaining a reduction of the particle number in the 50 cubic meter-volume room by 70% and the air has a saline load of 0.3 milligrams / cubic meter.

The process of obtaining the filter material and the apparatus for filtering with saline purification of air according to the claimed inventions by implementation leads to the following benefits
- allow obtaining materials with a high efficiency in air filtering, with an increased capacity of air salinisation
- allow the possibility of achieving various sizes of filter elements, from small to large and very large, with a three-dimensional lightweight self-support structure
- assures high air flows through the filter elements allowing the increased efficiency for the same apparatus dimensions
- assures the complex purification of air and gases used in breathing in the environment or in special equipment
- assured the reduction of unpleasant odors such as smoke, dust retention, reduction in the number of bacteria in the air
- assures a significant therapeutic effect on respiratory health

We give 5 examples of carrying out the process and filter element according to the inventions

The process, according to the invention, uses, as support for the salt structure, non-woven textile materials that are lightweight, with very high porosity and normally are used as the materials for the air primary filtering. The salt crystalline deposit is made on the non-woven fiber structure obtaining materials with high filtration and air salinisation capacities.

From these non-woven fabrics with saline deposits shall derive the filter elements which are incorporated into devices or equipment for the air saline filtration. Non-woven materials with salt deposits have a low weight and the high porosity of the non-woven material support ensures a large surface to deposit salts, thus allowing a very good contact with the air in which it releases the salt micro-crystals, as well as a large air flow.

The salt composition is achieved by impregnation using mainly over-saturated solutions obtained from sodium chloride coming directly from natural sources that contain traces of salts of calcium, magnesium and optionally there can be done over-impregnations with mineral waters or balneary used salts.

The filter elements can be achieved by direct impregnation of the filter, in which there is put the non-impregnated non-woven material

For an efficient air filtering and salt treating there can be made multi-layer filter elements which on the air output area have a layer of extruded granules of 4-6 mm grain, which form a three-dimensional micro crystalline structure during the filter element impregnation process.

The process of obtaining materials and filter elements for the saline air purification, according to the invention, consists in a first step in choosing the material on which salt deposits shall be made successively.

The non-woven fabric used as support is a material used for primary air filtering, fabric usually made of synthetic fibers such as polyester, polypropylene, commercially classified in grades G1, G2, G3, G4, fabric which maintains its structure during the saline impregnation process, no major collapsing phenomena of the material structure occurring when wetting with the impregnation solution.

The fabric thickness can vary between 5-50 mm and the weigh should be over 200 g/square meter. Material dimensions are chosen as appropriate depending on the filtering and air salinization capabilities.

In another phase there occurs the fabric impregnation, either by spraying or immersion, methods chosen function of the structure of the non-woven fabric used as a support, the fabric thickness and the surface dimensions of each piece of fabric.

The salt depositing is achieved by impregnation with over-saturated salt solutions, mostly from sodium chloride, such as from rock salt which contain up to 98% sodium chloride.

After the impregnation of the fabric, there takes place, in the next stage, is drying, when the excess solution is left to drain in a space with a temperature of 20-35 °C and 50-70% humidity, for about 2 - 3 days. It is not recommended to force the drying in order to make an as rich and strong microcrystalline structure as possible.

Impregnation can be achieved in successive stages by immersion in solution or, for large surfaces, by spraying the solution on the outer surfaces of the fabric.

Excess solution can be removed by drainage or be forced by blowing an air jet. Optionally, after impregnation there can be made a powdering of the impregnated fabric with salt powders in order to increase the degree of salt coverage.

The number of impregnations itself is limited only by the eventual clogging of the non-woven fabric support, but for an efficiently productive process that shall allow to obtain a product with the appropriate salinity effect, the number of impregnations, according to the used method, is recommended to be two or three.

Each impregnation step is followed by a controlled drying stage. In these stages there can be used over-saturated solutions which may contain different amounts salts existing in the balneary mineral waters: sulphureous waters, sodium waters, arsenic waters, iodated waters. Salts can be input by using mineral waters in the process of obtaining granules or directly with the concerned mineral salts. The most used are sodium and potassium iodide, potassium chloride, magnesium sulphate, sodium sulphate.

For obtaining the filter elements out of the impregnated non-woven fabric under this procedure, in another stage there is accomplished the cutting of the impregnated fabric and its fixing in a filter casing with punched sides. Filter elements out of the salt impregnated fabric can be obtained also just fixing the fabric edges in a frame.

The filter element can be obtained from the impregnation of the non-woven material which is put in a non-impregnated state in a box with perforated sides, following the same successive impregnation procedure described above, in the box optionally being a layer of extruded salt granules, and by impregnation and controlled drying obtaining a multilayer filter.

Evaluation of the efficiency obtained using filter elements for air filtration was done by comparison with values obtained using filter elements known on the market.

The measurements of air filtration efficiency were made with a laser particle counter, device currently used to monitor the air dust load.

Measurements of air flow values in devices using filter elements obtained according to the procedure, compared to known filter elements on the market were made by measuring with an anemometer, the air velocity at the outlet of the filter element.

The air salinity values were compared to the values of 0.2-0.5 milligrams / cubic meter obtained in measurements made in the salt mines with therapeutic use, values shown in the Journal of Chemistry 55 no/10/2004, as well as with values of 0.05 to 0.08 milligrams / cubic meter obtained for a known filter element.

For the action of air salinization, the measurements were made using the method presented in the Journal of Chemistry 55 nr/10 / 2004 page 792, the method which uses the ultra pure water conductivity changes through the salt treated air is bubbled.

We give further examples of the invention for obtaining saline porous material.

### Example 1.

A non-woven polyester fabric with a thickness of 14-16 mm, weight 350 g / square meter and size 10x20 cm is impregnated by immersion in an over-saturated solution made from rock salt containing 98% sodium chloride. After impregnation the excess solution is drained and the non-woven fabric piece is hung on a support and maintained at a room temperature of 25-30 °C and 50-70% humidity for two days. Impregnation is twice repeated, followed by the controlled drying stages. The non-woven material took over 21 grams of salts distributed in the mass of the porous structure, namely 10.5 g / square decimeter.

The non-woven impregnated fabric was cut in two and it was put into plastic filter housing with wall of 1-1.2 mm and the inner dimensions of the gap 10 x 10 x 2.5 cm, equipped on the sides with plastic grids of 10 mm meshes.

The obtained filter element was mounted in an air saline treatment device provided with a fan. In a test chamber with a 2 cubic meter volume, through using the device for 3 hours, there was reduced the number of particles in the air with 92%. The air salinization reached 0.22 mg / cubic meter and the air flow provided by the device with the filter elements was 17 cubic meter/ h.

A comparative test with a known filter assured the reduction of particle number provided with 70%. The air salinization reached 0.08 mg / cubic meter and the air flow provided by the device with this filter was 9 cubic meter / h.

### Example 2.

A non-woven polyester fabric with a thickness of 14-16 mm, weight 350 g / square meter and size 10x20 cm is impregnated by immersion in an over-saturated solution of rock salt containing 98 % sodium chloride. After impregnation allow the excess solution to drain. The non-woven still wet material is put into a tray and it is powdered on one side with salt powder with a fineness under 150 microns, ensuring a uniform coating of the fibers with keeping free gaps between them. The operation is repeated on the other side of the fabric and the non-woven fabric piece is hung on a support and maintained at a room temperature of 25-30 ° C and 50-60% humidity for two days. Keep the fabric for another 24 h in a place with a temperature of 25-30 ° C and humidity 25-30%. The fabric is again impregnated with a saturated solution followed by the controlled drying stage. The non-woven fabric took over 29 grams of salts distributed in the mass of the porous structure, namely 14.5 g / square decimeter.

The impregnated non-woven material was cut in two and it was put in filter housing as in Example 1, which was installed in an air salt treatment device provided with a fan. There was made an experiment as presented in Example 1, in a test chamber with a 2 cubic meter volume by using the device for 3 hours. The number of particles in the air was reduced with 96%. The air salinization reached 0.28 mg / cubic meter and the air flow provided by the device with the filter elements was 16 cubic meter /h.

### Example 3.

A non-woven polyester fabric with a thickness of 10-12 mm, weight 220 g / square meter and size 20x60 cm is impregnated by spraying an over-saturated solution of rock salt containing 98% sodium chloride. After spraying the non-woven material is blown with an air flow with a speed of 10-15 m / sec, achieving the solution dispersion in the structure of the non-woven fabric and removing the excess solution. The non-woven fabric piece is hung on a support and maintained at a room temperature of 25-30 ° C and 50-70% humidity for two days. The fabric is again impregnated by spraying with an over-saturated solution of rock salt containing 98% sodium chloride followed by the air blowing and the controlled drying stage.

The material is twice more impregnated by spraying a saturated solution obtained out of sodium chloride dissolved in mineral iodated mineral water from Baile Fisici, followed by blowing air and the controlled drying phase.

The non-woven fabric took over 98 grams of salts distributed in the mass of the porous structure, namely 12.25 g / square decimeter.

A filter was made by fixing the impregnated non-woven material between two plastic frames of 10 mm mesh.

The filter element was mounted in a ventilation hole with the dimensions of 20 x 60 cm in a room of 150 cubic meters. The air passing the filter had a speed of 2m / s, corresponding to a flow rate of over 800 cubic meter / h.

By using for 24 hours the number of particles in the air was reduced with 60% and the air salinization was measured to 0.11 mg/cubic meter.

### Example 4.

A polyester non-woven fabric with a thickness of 12-14 mm and weight 320 g/square meter is cut out in pieces sized 10x10 cm which are overlapped 3 by 3 fabric pieces in a plastic case as in Example 1.

The filter element containing non-woven fabric is impregnated by immersion in an over-saturated solution of rock salt containing 98% sodium chloride. The excess solution is drained after impregnation and the filter element is put on a tray in a place with a temperature of 25-30 ° C and 50-70% humidity for two days. The impregnation is twice repeated, followed by the controlled drying stages. The filter element took over, by impregnation, 20 grams of salts distributed in the non-woven fabric mass

The obtained saline impregnated filter element was introduced into an air purification device equipped with a fan that circulated air at an average flow of 17 cubic meter / h. By air recirculation in a 50 cubic meter room for 24 h, the total number of particles in the room dropped by 70% and the air had a salt load of 0.12 mg / cubic meter

### Example 5.

In a plastic case as in Example 1 there was introduced a layer of mono-granular extruded grains of salt with a 4-6 mm granulation made of microcrystalline sodium chloride deposits, dried and tied in a three-dimensional structure by wetting with saturated NaCl solution and drying, over which there were placed two layers of non-woven polyester fabric with a thickness of 12 mm and density 350 g / square meter. On both sides of the filter cartridge there was sprayed a saturated sodium chloride solution for 10 sec. The solution was made from rock salt with a composition of 96% NaCl, 1.2% magnesium sulphate, 0, 2% sodium iodide and then air blowing with a speed of 10-15 m / sec. The filter cartridge was left to dry slowly for 5 days at a temperature of 25 ° C and a humidity of 60%. The spray impregnation was repeated, as well as the air blowing and the controlled atmosphere drying. A layered filter element was obtained. To one of the sides is the saline impregnated non-woven fabric and to the other is the saline grain layer linked by microcrystalline deposits.

The obtained element was introduced into an air purification device equipped with a fan that circulated air at an average flow of 15 cubic meter / h. The filter was positioned so that the air input to be on the side where the non-woven fabric is. By air recirculation in a 50 cubic meter room for 24 h, the total number of particles in the room dropped by 70% and the air had a measured salt load of 0.3 mg / cubic meter

The air passed through the filter elements obtained according to the examples, when used in inhabited areas, is cleaned of dust, unpleasant odors, cigarette smoke. The air is perceived as fresh, pleasant to breathe, the beneficial effects being observed by people with asthma, rhinitis, sinusitis, respiratory allergies.

Using filters in rooms in the presence of people with sensitivity to respiratory infections reported in a medical trial to significantly reduce the infectious recurrence in risky periods.

## Claims

1. Procedure for obtaining a filter fabric **characterized by** that on a support consisting of a non-woven textile material with filtering features with a thickness of 5 to 50 mm and a weight of minimum 200 g/square meter, on which there are made one, two or more saline crystalline deposits of salts by successive material impregnations by immersing in salt over-saturated solutions that contain mainly sodium chloride, after each impregnation of the material taking place the removal of the solution excess by dripping or by blowing with a jet of air and a slow drying in a room with a temperature between 20 and 35 °C and a humidity of 50 to 70% for 2 to 3 days, after each impregnation could be a dusting of the deposit surface with salt powders containing up to 98 % of sodium chloride.

2. Procedure, according to claim 1, **characterized by** the fact that there can be chosen the non-woven textile material from which the support is made, which is made up of synthetic fibers such as polyester or polypropylene in accordance with the European standards for coarse and fine filters, G1 - G4.

3. Procedure according to claims 1 and 2, **characterized by** the fact that the non-woven textile is impregnated with an over-saturated solution obtained from rock salt derived directly from a natural source, rock salt which contains up to 98% of sodium chloride and traces of salts of calcium and magnesium, and preferably the penultimate and final impregnation of the non-woven material could be made with an over-saturated solution of sodium chloride and potassium iodide or magnesium sulphate or mineral sulphureous, arsenic, bicarbonate or iodinated waters.

4. Procedure, according to claim 1, **characterized by** the fact that, after the last impregnation of the non-woven textile material followed by dripping the solution excess and drying, on both sides of the material there can be sprayed, for 8 ... 15 seconds, an over-saturated solution of sodium chloride obtained from rock salt that contains 96% sodium chloride, 1.2% magnesium sulphate, 0.2 % potassium iodide, after which the material is blown with a jet of air at a speed of 10 to 15 m/sec, and then it is dried slowly in an enclosure for 5 days at a temperature of 25 °C and a humidity of 60%.

5. Process, in accordance with claims 1 and 4, **characterized in that** impregnation of non-woven textile fabric, already in the housing, could be made by successive spraying, on both sides, of a saturated solution of sodium chloride, with or without other admixtures of salts.

6. Procedure according to claims 1 ... 3, **characterized by** the fact that the non-woven textile material is placed in a box with perforated sides of a filter cartridge in which there is placed a layer consisting of granules extruded from rock salt after which it is subject to one, two or more successive impregnations in an over-saturated salt solution, a controlled drying taking place after each impregnation.

7. Apparatus for filtering with saline purification of air, comprising a filter element, made of a material produced from applying the procedure of claims 1...6, **characterized by** the fact that the filter element consists of a non-woven polyester material with a thickness of 14 to 16 mm and a weight of 350 g/square meter and dimensions of 10x20 cm which is impregnated by immersion in an over-saturated solution of rock salt that contains 98% sodium chloride, which has taken over 2 grams of salts distributed in the porous structure mass, respectively 10.5 grams/ square decimeter, this material being placed in a filter case made of a plastic material with a wall with a thickness of 1- 1.2 mm that delimits a three dimensional space with values of 10x10x2.5 cm having on the lateral faces some grids made of a plastic material with a mesh of 10 mm, by using the filter in a room with a volume of 2 cubic meters for 3 hours at an air flow rate of 17 cubic meter /h, the number of particles in the room being reduced by 92 %, and the air salinization was of 0,22 mg/cubic meter.

8. Apparatus for filtering with saline purification of air, comprising a filter element, made of a material produced from applying the procedure of claims 1...6 **characterized by** the fact that it is made up of a non-woven polyester material which, by impregnation in an over-saturated solution of rock salt that contains 98% sodium chloride, drying and dusting on a face with salt powder with a finesse under 150 micrometers, took over 29 g salts distributed in the porous structure mass, 14.5 g/ square decimeter respectively, this material being placed in a filter case, in a test chamber with a volume of 2 cubic meter providing a reduction in the number of particles in the air with 96 %, an air salinity of 0.28 mg/cubic meter and the flow of the purified air is 16 cubic meter /h, after up to 3 hours of operation.

9. Apparatus for filtering with saline purification of air, comprising a filter element, made of a material produced from applying the procedure of claims 1...6, produced in another constructive embodiment **characterized by the fact that** is formed of a non-woven polyester material with a thickness of 10-12 mm and a weight of 220 g/square meter and a size of 20x60 cm which is impregnated by spraying an over-saturated solution made from rock salt containing 98% sodium chloride, which is repeated twice followed by two impregnations by spraying with an over-saturated solution obtained from sodium chloride dissolved in iodated sulfured mineral water, and it took over 98 g salts distributed in the porous structure mass, respectively 12.25 g/square decimeter; the filter made by fixing the material between 2 frames made of a plastic mesh with a size of 10 mm reduced the number of particles in the air with 60% and insured the air salinisation of 0,11 mg/cubic meter, in a room with a volume of 150 cubic meters for up to 24 hours at the air speed of 2m/s and a flow rate of 800 cubic meters/h.

10. Apparatus for filtering with saline purification of air, comprising a filter element, made of a material produced from applying the procedure of claims 1...6, produced in another constructive embodiment **characterized by the fact that** is formed of a non-woven polyester material with a thickness of 12 - 14 mm and a weight of 320 g/square meter which after 3 impregnations in over-saturated solution made from rock salt containing 98% sodium chloride and repeated dryings takes, by impregnation, 20 grams of salts distributed in the non-woven material mass, 3 pieces of this fabric with dimensions 10x10 cm being overlapped and placed in a case made of plastic in which, should there be re-circulated an air jet with an average flow of 17 cubic meter /h for 24 h in a room with a volume of 50 cubic meter, the total number of particles in the room decreases with 70% and the air has a saline load of 0.12 mg/cubic meter

11. Apparatus for filtering with saline purification of air, comprising a filter element, made of a material produced from applying the procedure of claims 1...6, produced in another constructive embodiment **characterized by the fact that** is made up of a non-woven polyester material with a 12 mm thickness and a weight of 350 g/square meter, layered, in which the saline impregnated non-woven material is to one of the faces and to the other there is the layer of saline grains connected by microcrystalline deposits, by the filter cartridge being re-circulated with a fan for 24 hours, an air flow of 15 cubic meter /h entering the filter cartridge through the face formed by the non-woven material, obtaining a reduction of the particle number in the 50 cubic meter volume room by 70% and the air has a saline load of 0.3 mg/cubic meter

## Patentansprüche

1. Verfahren zur Herstellung eines Filtermaterials, **dadurch gekennzeichnet, daß** auf einem Träger, bestehend aus einem nicht-gewebten Textilmaterial mit Filtereigenschaften mit einer Dicke von 5 bis 50 mm und einem Flächengewicht von mindestens 200 g/gm, ein, zwei oder mehrere kristalline Ablagerungen von Salz aufgebracht werden, unter aufeinanderfolgende Imprägnierungen von Material, durch Eintauchen in übersättigten Lösungen des Salz, die im Wesentlichen Natriumchlorid enthalten, indem nach jedem Imprägnierung des Materials das Entfernung der überschüssigen Lösung durch Abtropfen und Blasen mit einem Luftstrahl und langsames Trocknen in einem Raum bei einer Temperatur zwischen 20 und 35°C und einer Luftfeuchtigkeit von 50 bis 70% für 2 bis 3 Tage erfolgt, indem nach jedem Imprägnierung ein Zerstäubung des Salzpulver mit einem Gehalt von bis zu 98% Natriumchlorid über der Ablagerungsfläche ausgeführt werden kann.

2. Verfahren nach Anspruch 1, **dadurch gekennzeichnet, daß** das nicht-gewebten Textilmaterial, aus dem der Träger gefertigt ist, nach den europäischen Normen für Grob- und Feinfilter G1-G4, aus synthetischen Fasern wie Polyester oder Polypropylen hergestellt wird.

3. Verfahren nach einem der Ansprüche 1 und 2, **dadurch gekennzeichnet, daß** das nicht-gewebten Material mit einer übersättigten Lösung des Salzes, die aus Steinsalz direkt aus einer natürlichen Quelle gewonnen wird und bis zu 98% Natriumchlorid und Spuren von Salzen von Calcium und Magnesium enthält, imprägniert wird, und die vorletzten und letzten Imprägnierungen des Materials vorzugsweise mit einer übersättigten Lösung von Natriumchlorid und Kaliumiodid oder Magnesiumsulfat oder Mineralschwefelwasserstoff, Arsen, Bicarbonat oder iodierten Wasser ausgeführt werden.

4. Verfahren nach Anspruch 1, **dadurch gekennzeichnet, daß** nach dem letzten Imprägnierung des nicht-gewebten Textilmaterials, gefolgt von Abtropfen der überschüssiges Lösung und Trocknen, auf beiden Seiten des Materials kann ein übersättigten Lösung von Steinsalz, das 96% Natriumchlorid, 1,2% Magnesiumsulfat, 0,2% Kaliumiodid enthält, für 8 .. 15 s aufgesprüht werden, wonach ein Luftstrahl mit einer Geschwindigkeit von 10 bis 15 m/s über das Material geblasen ist, und es wird dann langsam in einem Gehäuse für 5 Tage bei einer Temperatur von 25° C und einer Luftfeuchtigkeit von 60% getrocknet.

5. Verfahren gemäß Ansprüchen 1 und 4, **dadurch gekennzeichnet, dass** die Imprägnierung des nicht-gewebten, bereits in dem Gehäuse befindlichen Materials durch aufeinanderfolgendes Besprühen von einer gesättigten Natriumchloridlösung mit oder ohne andere Zusätze von Salzen auf beiden Seiten vorgenommen werden kann.

6. Verfahren nach einem der Ansprüche 1 bis 3, **dadurch gekennzeichnet, daß** das nicht-gewebten Textilmaterial in einem Gehäuse mit perforierten Seiten einer Filterkassette, in dem eine Schicht aus von Steinsalz extrudierten Granulaten platziert wird, nachdem es einer, zweier oder mehrere aufeinanderfolgenden Imprägnierungen in einer übersättigten Salzlösung unterzogen wird, indem eine gesteuerte Trocknung nach jeder Imprägnierung stattfindet.

7. Gerät zur Filterung durch salinische Luftreinigung, umfassend ein Filterelement aus dem gemäß dem Verfahren nach den Ansprüchen 1 bis 6 hergestellten Filtermaterial, **dadurch gekennzeichnet, daß** das Filterelement aus einem nicht-gewebten Polyestermaterial mit einer Dicke von 14 bis 16 mm und einem Flächengewicht von 350 g/m² und Abmessungen von 10x20 cm besteht, das durch Eintauchen in einer übersättigte Lösung von Steinsalz, das 98% Natriumchlorid enthalt, imprägniert wird, das mehr als 2 Gramm von in der porösen Struktur verteilt Salz, bzw. 10,5 g / dm², aufnimmt, wobei dieses Material in einem Kunststoff bestehende Filtergehäuse mit einer Wand mit einer Dicke von 1-1,2 mm, die einen dreidimensionalen Raum von 10x10x2.5 cm, begrenzt, eingebracht ist, wobei der Raum ein Gitter von 10 mm auf den Seitenflächen hat, durch die Verwendung des Filters in einem Raum mit einem Volumen von 2 m³ für 3 Stunden bei einer Luftströmungsgeschwindigkeit von 17 m³ / h, die die Anzahl der Partikel in den Raum um 92% reduziert, und die Luft hat eine Salzbelastung von 0,22 mg/m³.

8. Gerät zur Filterung durch salinische Luftreinigung, umfassend ein Filterelement aus dem gemäß dem Verfahren nach den Ansprüchen 1 bis 6 hergestellten Filtermaterial, **dadurch gekennzeichnet, daß** es aus einem nicht gewebten Polyestermaterial besteht, das durch Imprägnierung in einer übersättigten Lösung von Steinsalz, das 98% Natriumchlorid enthält, Trocknen und Zerstäuben auf einer Seite mit Salzpulver mit einer Feinheit unter 150 Mikrometer, mehr als 29 g in der porösen Strukturmasse verteilten Salz übernimmt, bzw. 14,5 g / Quadratdezimeter, dieses Material in einem Filtergehäuse in einer Prüfkammer mit einem Volumen von 2 m³ eingebracht ist, was zu einer Verringerung der Zahl der Teilchen in der Luft um 96%, einen Salzgehalt von 0,28 mg/m³ und einen Durchfluss der gereinigten Luft von 16 m³/h, im Betrieb nach bis zu 3 Stunden führt.

9. Gerät zur Filterung durch salinische Luftreinigung, umfassend ein Filterelement aus dem gemäß dem Verfahren nach den Ansprüchen 1 bis 6 hergestellten Filtermaterial, in einer weiteren Ausführungsform ausgebildet, **dadurch gekennzeichnet, daß** es aus einem nicht gewebten Polyestermaterial mit einer Dicke von 10-12 mm und einem Flächengewicht von 220 g / m² und einer Große von 20x60 cm ausgebildet ist das durch zweimal wiederholten Bespruhen einer übersättigten Lösung von Steinsalz das 98% Natriumchlorid enthält, imprägniert wird, gefolgt von zwei Imprägnierung in einer aus Natriumchlorid gewonnen übersättigten Lösung, in iodierte Mineralwasser gelöst, und es dauerte über 98 g Salze in der porösen Struktur Masse bzw. 12,25 g/dm² verteilt sind, der Filter durch Fixieren des Materials zwischen zwei Rahmen einer aus einem Kunststoff Gitter mit einer Größe von 10 mm die Anzahl der Partikel in der Luft um 60% reduziert und eine Luftsalinität von 0,11 mg/m³, in einem Raum mit ein Volumen von 150 m³ bis zu 24 Stunden bei der Luftgeschwindigkeit von 2 m/s und einer Durchfluss von 800 m³/h versorgt.

10. Gerät zur Filterung durch salinische Luftreinigung, umfassend ein Filterelement aus dem gemäß dem Verfahren nach den Ansprüchen 1 bis 6 hergestellten Filtermaterial, in einer weiteren Ausführungsform ausgebildet, **dadurch gekennzeichnet, daß** es aus einem nicht gewebten Polyestermaterial mit einer Dicke von 12 - 14 mm und einem Flächengewicht von 320 g / qm gefertigt wird, die nach drei Imprägnierungen im aus Steinsalz gewonneten übersättigten Lösung, das 98% Natriumchlorid enthält, und wiederholte Trocknungen, durch Imprägnierung, im Vliesstoff-Masse verteilt 20 Gramm Salze aufnimmt, wobei 3 Stücke dieses Gewebes mit den Abmessungen 10x10 cm überlappen werden und in einem aus Kunststoff hergestellten Gehäuse angeordnet sind, in welchem sollte es rezirkuliert wird ein Luftstrahl mit einem mittleren Durchfluss von 17 m³ / h für 24 h in einem Raum mit einem Volumen von 50 m³, der Gesamtzahl der Teilchen nimmt im Raum um 70% zu und die Luft hat einer Salzbelastung von 0,12 mg /m³.

11. Gerät zur Filterung durch salinische Luftreinigung, umfassend ein Filterelement aus dem gemäß dem Verfahren nach den Ansprüchen 1 bis 6 hergestellten Filtermaterial, in einer weiteren Ausführungsform ausgebildet, **dadurch gekennzeichnet, daß** es aus einem geschichteten Polyestervlies mit einer Dicke von 12 mm und einem Flächengewicht von 350 g/qm gefertigt wird, wobei auf einer Seite das mit der Salzlösung imprägnierten, nicht-gewebten Material und auf der anderen Seite die aus Salzkörner bestehende Schicht vorhanden ist, die durch mikro Ablagerungen verbunden wird, die in einem Filterkartusche eingebracht ist, die mit einem Gebläse vorgesehen ist, wobei ein Luftstrom von 15 m³/h in die Filterkartusche durch die Fläche des nicht-gewebten Material geblasen ist für 24 Stunden, wodurch eine Verringerung der Partikelzahl im dem Raum von 50 m³ um 70% erreicht ist und die Luft hat eine Salzbelastung von 0,3 mg/m³.

## Revendications

1. Procédure d'obtention d'un tissu de filtre **caractérisé en ce que** sur un support constitué d'un matériau non-tissé textile avec des caractéristiques de filtrage avec une épaisseur de 5 à 50 mm et un poids d'au moins 200 g / mètre carré, sur lequel sont réalisées une , deux ou plus de solution saline cristallins des dépôts de sels, par imprégnation des matières successives par immersion dans des solutions qui contiennent principalement du chlorure de sodium sursaturée, après chaque imprégnation de la matière qui a lieu le retrait de l'excès de solution par égouttage ou par soufflage avec un jet de air et un séchage lent dans une chambre avec une température comprise entre 20 et 35 °C et une humidité de 50 à 70% pendant 2 à 3 jours, après chaque imprégnation peut être une formation de poussière de la surface de dépôt avec des poudres de sel contenant jusqu'à 98% de chlorure de sodium.

2. Procédure selon revendication 1, **caractérisé par le fait qu'**il peut être choisie de la matière textile non-tissé à partir de laquelle le support est réalisé, qui est constitué de fibres synthétiques telles que le polyester ou le polypropylène, conformément aux normes européennes pour grossiers et les filtres fins, G1 - G4.

3. Procédure selon les revendications 1 et 2, **caractérisé par le fait que** le textile non-tissé est imprégné d'une solution sur-saturée obtenue à partir de sel de roche provenant directement d'une source naturelle, le sel gemme, qui contient jusqu'à 98% de chlorure de sodium et des traces de sels de calcium et de magnésium, et de préférence de l'avant-dernière et le dernière imprégnation du matériau non-tissé peuvent être faites avec une solution sur-saturée de chlorure de sodium et d'iodure de potassium ou de sulfate de magnésium ou sulfureux minérale, arsenic, bicarbonate ou des eaux iodés.

4. Procédure selon revendication 1, **caractérisé par le fait que**, après la dernière imprégnation de la matière textile non tissée, puis par égouttage de l'excès de solution et séchage, sur les deux côtés du matériau ou il peut être pulvérisé, entre 8 et 15 secondes, une solution sur-saturée de chlorure de sodium obtenu à partir de sel gemme qui contient 96% du chlorure de sodium, 1,2% de sulfate de magnésium, 0,2% d'iodure de potassium, et après le matériel est soufflé par un jet d'air à une vitesse de 10 à 15 m / sec, et ensuite il est séché lentement dans une enceinte pendant 5 jours à une température de 25 °C et une humidité de 60%.

5. Processus, selon les revendications 1 et 4, **caractérisé en ce que** l'imprégnation du tissu non tissé textile, déjà dans le boîtier, peut être effectué par pulvérisation successive sur les deux côtés, d'une solution saturée de chlorure de sodium, avec ou sans d'autres mélanges de sels.

6. Procédure selon les revendications 1 ... 3, **caractérisé par le fait que** le matériau textile non-tissé est placé dans une boîte avec des trous perforés, et d'une cartouche de filtre dans lequel est placée une couche constituée de granulés extrudés à partir de sel gemme après auxquelles elle est soumise à un, deux ou plusieurs imprégnations successives dans une solution sur-saturée de sel, et après un séchage contrôlé ayant lieu après chaque imprégnation.

7. Dispositif de filtrage avec une solution saline pour la purification de l'air, comprenant un élément de filtre, constitué d'un matériau produit à partir de l'application de la procédure selon les revendications 1...6, **caractérisé par** le fait qui est constitué d'un matériau non-tissé de polyester ayant une épaisseur de 14 à 16 mm et un poids de 350 g / mètre carré et les dimensions de 10x20 cm qui est imprégné par immersion dans une solution sur-saturée de sel de roche qui contient 98% du chlorure de sodium, ce qui a pris plus de 2 grammes de sels distribués dans la masse de la structure poreuse, respectivement 10,5 grammes / décimètre carré, ce matériau étant placée dans un boîtier de filtre constitué d'un matériau plastique avec une paroi d'une épaisseur de 1- 1,2 mm qui délimite un espace à trois dimensions avec des valeurs de 10x10x2.5 cm présentant sur les faces latérales des grilles réalisées en un matériau plastique avec une maille de 10 mm, en utilisant le filtre dans une chambre avec un volume de 2 mètres cubes pendant 3 heures à une vitesse de 17 mètres cubes / h de débit d'air, le nombre de particules dans la chambre étant réduit de 92%, et la salinisation de l'air était de 0.22 mg / mètre cube.

8. Dispositif de filtrage avec une solution saline pour la purification de l'air, comprenant un élément de filtre, constitué d'un matériau produit à partir de l'application de la procédure selon les revendications 1...6, **caractérisé par le fait qu** 'il est constitué d'un matériau non-tissé polyester, qui, par imprégnation dans une solution sursaturée de sel gemme qui contient du chlorure de sodium à 98%, le séchage et la formation de poussière sur une visage avec de la poudre de sel avec une finesse inférieure à 150 micromètres, a pris plus de 29 g de sels distribués dans la masse de la structure poreuse, 14,5 g / décimètre carré respectivement, ce matériau étant placé dans un boîtier de filtre, dans une chambre de test avec un volume de 2 mètre cube fourniture d'une réduction dans le nombre de particules dans l'air de 96%, une salinité de l'air de 0,28 mg / mètre cube et le débit de l'air purifié est de 16 mètres cubes / h, après un maximum de 3 heures de fonctionnement.

9. Dispositif de filtrage avec une solution saline pour la purification de l'air, comprenant un élément de filtre, constitué d'un matériau produit à partir de l'application de la procédure selon les revendications 1...6, produit par une autre mode de réalisation constructive, **caractérisé par le fait qu'**il est formé d'un matériau non-tissé de polyester ayant une épaisseur de 10 à 12 mm et un poids de 220 g / mètre carré et une taille de 20x60 cm, qui est imprégné par pulvérisation d'une solution sur-saturée à base de sel de roche contenant 98% du chlorure de sodium, ce qui est répété deux fois suivi par deux imprégnations par pulvérisation d'une solution sur-saturée obtenue à partir de chlorure de sodium dissous dans l'eau iodé minéral soufré, et plus de 98 g sels répartis dans la structure de la masse poreuse, respectivement 12,25 g / décimètre carré; le filtre fait en fixant le matériau entre 2 cadres en matière plastique avec une taille de 10 mm réduit le nombre de particules dans l'air avec 60% et assure la salinization de l'air de 0,11 mg / mètre cube, dans une chambre avec un volume de 150 mètres cubes pendant 24 heures à la vitesse d'air de 2 m / s et un débit de 800 mètres cubes / h.

10. Dispositif de filtrage avec une solution saline pour la purification de l'air, comprenant un élément de filtre, constitué d'un matériau produit à partir de l'application de la procédure selon les revendications 1...6, produit par une autre mode de réalisation constructive, **caractérisé par le fait qu'**il est formé d'un matériau non-tissé de polyester ayant une épaisseur de 12 à 14 mm et un poids de 320 g / mètre carré après trois imprégnations en solution sursaturée fait de sel gemme contenant 98% de chlorure de sodium et séchages répétés prend, par imprégnation, 20 grammes de sels répartis dans la masse non-tissé, trois morceaux de ce tissu aux dimensions 10x10 cm étant superposées et placées dans un boîtier en plastique dans lequel , devrait être re-circuler un jet d'air avec un débit moyen de 17 mètre cube / h pendant 24 h dans une chambre avec un volume de 50 mètres cubes, le nombre total de particules dans la chambre diminue avec 70% et l'air a une charge saline de 0,12 mg / mètre cube

11. Dispositif de filtrage avec une solution saline pour la purification de l'air, comprenant un élément de filtre, constitué d'un matériau produit à partir de l'application de la procédure selon les revendications 1...6, produit par une autre mode de réalisation constructive, **caractérisé par le fait qu'**il est constitué d'un matériau non-tissé de polyester ayant une épaisseur de 12 mm et un poids de 350 g / mètre carré, en couches, dans lequel la solution saline imprègne un matériau non-tissé est l'une des faces et de l'autre il y a la couche de grains salines reliés par des dépôts microcristallins, et par le cartouche de filtre est remis en circulation d'un ventilateur pendant 24 heures, un courant de 15 mètres cubes / h d'air entrant dans la cartouche de filtre à travers la face formée par le matériau non-tissé, en l'obtention d'une réduction de 70% du nombre de particules dans la chambre de volume de 50 mètre cube et que l'air a une charge saline de 0,3 mg / mètre cube
